# EUROPÄISCHE PATENTSCHRIFT

(11) **EP 1 216 888 B1**
(45) Veröffentlichungstag und Bekanntmachung des Hinweises auf die Patenterteilung: **10.08.2005**
(21) Anmeldenummer: 01129159.8
(22) Anmeldetag: 08.12.2001
(51) Int. Cl.: B60R 16/02, G08G 1/01, G07C 5/00, G08G 1/123

(54) **Standardinterface für Fahrzeuge**
Standard interface for vehicles
Interface standard pour véhicule

(30) Priorität: 23.12.2000 DE 10064934
(43) Veröffentlichungstag der Anmeldung: 26.06.2002
(73) Patentinhaber: Bayerische Motoren Werke Aktiengesellschaft, 80809 München (DE)
(72) Erfinder: Kramer, Fritz, 85551 Kirchheim (DE); Breitenberger, Susanne, 80336 München (DE); Huber, Werner, 85609 Aschheim (DE)

(56) Entgegenhaltungen:
- WO-A-97/13208
- DE-A- 19 700 353
- DE-A- 19 755 459
- DE-U- 29 723 097
- US-A- 6 064 705

## Beschreibung

Die Erfindung betrifft ein Standardinterface für Fahrzeuge, um Informationen, die direkt oder indirekt Aussagen über die Verkehrssituation um ein Fahrzeug oder Umweltbedingungen zulassen in ein standardisiertes Format umzuwandeln.

Im Zusammenhang mit sog. Telematikdiensten ist es bekannt, ein Fahrzeug im weitesten Sinne als Sensor für die Erkennung einer Verkehrs- oder Umweltsituation an dem Ort einzusetzen, wo sich das Fahrzeug gerade befindet. Durch Zusammenschau einer Vielzahl solcher fahrzeuggenerierten Informationen kann ein Netzwerk geschaffen werden, das Aufschluss über ein regionales Verkehrgeschehen gibt. Für diese Vorgehensweise wurde bereits der Begriff "Extended Floating Car Data" (kurz: XFCD) geprägt.

Bisherige Methoden für die mobile Verkehrserfassung basieren oft nur auf der Fahrzeuggeschwindigkeit und den Positionsdaten eines Fahrzeugs. In jedem Fahrzeug liegt jedoch ein weites Spektrum an weiteren dynamischen und statistischen Daten vor, was im Fahrzeug üblicherweise über Datenbusse, die einzelnen Systeme selbst, wie Navigationssysteme etc., und die Sensorik bereitgestellt wird.

Aktuelle Entwicklungen beschäftigen sich damit, solche fahrzeuggenerierte Daten während der Fahrt aufzuzeichnen und/oder mittels spezieller Erkennungs-Software allgemeine Aussagen über herrschende, verkehrsbezogene Zustände, zu erarbei-ten. Erkannte Ereignisse und Zustände können dann aktuell beispielsweise an eine immobile Zentrale übermittelt werden, wo sie verarbeitet, analysiert und ggf. wiederum anderen Verkehrsteilnehmern zur Verfügung gestellt werden. Solche Systeme sind z.B. aus DE-A-19700353 und US-A-6064705 bekannt.

Die Datenstrukturen der Fahrzeuge der verschiedenen Fahrzeughersteller sind jedoch verschieben. So werden zur Datenaufnahme und -verdichtung für die verschiedenen Fahrzeuge jeweils individuelle Systeme notwendig, um die in den einzelnen Fahrzeugen zum Teil über sehr unterschiedliche Datenformate und Informationssysteme zur Verfügung stehende Informationen auswerten und weiterverarbeiten zu können. Für die Weiterverarbeitung dieser Daten müssen momentan bei den Endgeräten, die der Verkehrs- und Umfeldinformationsgewinnung dienen, erhebliche Anpassungsarbeiten durchgeführt werden.

Aufgabe der Erfindung ist es, diese Anpassungsarbeiten zu vermeiden.

Diese Aufgabe wird durch die im Anspruch 1 angegebenen Merkmale gelöst.

Demgemäss ist ein Standardinterface vorgesehen, mit dem aus den in einem Fahrzeug vorliegenden Informationen über statische Daten des jeweligen Fahrzeugs und dynamische Verkehrs- und Umweltdaten eine standardisierte Information mit einem sog. Header und einem Informationsteil generiert und über eine Kommunikationseinrichtung an eine Zentrale abgegeben wird. Diese standardisierte Information, nachfolgend auch als Ausgangsinformation bezeichnet, besitzt ein definiertes digitales Format mit vorgegebener Länger Aufgrund dieser normierten Ausgangsinformation können alle auf die Daten der Fahrzeugsensorik aufsetzenden Module und Endgeräte ohne weiteren Anpassungsbedarf unmittelbar daran angeschlossen werden. Die Vorteile entstehen dabei für die Fahrzeughersteller als auch die Fahrzeugnutzer, die Verkehrs- und Umfeldinformationen gewinnende Endgeräte beliebig austauschen können.

Das Standardinterface besitzt Eingänge für Informationen, die direkte oder indirekte Aussagen über die Verkehrssituation um ein Fahrzeug oder Umweltbedingungen zulassen. Dazu gehören nahezu alle Informationen, die in einem Fahrzeug anfallen oder vorhanden sind, beispielsweise die Tageszeit, die gefahrene Strecke, die gefahrene Richtung, der Straßenname der befahrenen Straße, die Straßenkategorie, die Geschwindigkeit, die Gaspedalstellung, die Fahrerwunschgeschwindigkeit, die Geschwindigkeitsregler, die Bremspedalbetätigung, ein ABS oder anderer Bremsregeleingriff, die Temperatur, die Betätigung von Lichtern oder Wegrichtungsanzeigern, der Einsatz von Scheibenwischer, Regensensorinformationen, Tankfüllstandsinformationen, Radeinschlags-, Lenkwinkeleinschlagsinformationen, die Fahrzeugbeschleunigung etc. Jede dieser Information gibt in irgendeiner Weise eine Auskunft über die Verkehrssituation oder eine Umweltbedingung.

Der Header der Ausgangsinformation umfasst in der Regel lediglich statische Informationen, die nur einmal beim Start der Datenaufzeichnung zu generieren sind. Die statischen Informationen beinhalten Daten, wie beispielsweise die Softwarteversion, den Datenerfasser, den Fahrzeugtyp, das Fahrzeugmodell, die Höchstgeschwindigkeit des Fahrzeugs, die Fahrzeugleistung, das Fahrzeuggetriebe etc.

Wesentlich beim Header ist noch ein Datum, welches als Bitvektor ausgebildet ist und angibt, welche Daten vom Fahrzeug generiert und damit unterstützt werden. Im dem Header nachfolgenden Informationsteil mit fester Datenstruktur ist genau festgelegt, welches Bit oder Byte welche Information angibt. Wird nun diese Information vom Fahrzeug nicht geliefert, so kann diese Funktion auch nicht unterstützt werden. Dies muss einem nachfolgenden Endgerät angezeigt werden. Dazu ist der Bitvektor vorgesehen.

Die dynamischen Daten des Informationsteils werden vorzugsweise in einem zeitlich vorgegebenen Abstand, z. B. Sekundentakt, aufgefrischt.

Die kontinuierlich neu gelieferten normierten und standardisierten Ausgangsinformationen werden beispielsweise in eine Ausgabedatei oder einen Speicher geschrieben und über eine Ausgabeleitung an eine Zentrale abgegeben. Da der Datensatz eine feste Satzlänge besitzt, gibt es keine Feld- oder Zeilentrenner. Die Datenaufzeichnung bzw. -weitergabe geschieht damit vorzugsweise - logisch verstanden - zeilenweise.

Eine Steuereinrichtung im Standardinterface setzt die eingehenden Informationen in die jeweils zugeordnete digitale Information für das vorgegebene Format um. Die Umsetzung kann nach einem abgespeicherten Algorithmus erfolgen. Dabei können mehrere Algorithmen im Standardinterface hinterlegt werden. Je nach verwendetem Fahrzeugtyp kann ein passender Algorithmus zur Umsetzung der Eingangsinformationen in das Datenformat ausgewählt werden. Beispielsweise muss dabei berücksichtigt werden, ob eine eingehende Information, z. B. eine Temperaturinformation, in analoger oder digitaler Form vorliegt und über welchen Eingang die Information zu gewinnen ist (z.B. Busleitung oder einzelne Leitung, digitale oder analoges Signal etc).

Je nach Fahrzeughersteller können die Eingangsstrukturen des Standardinterfaces verschieden gewählt werden, da verschiedene Leitungs- und Busstrukturen vorliegen können. Wesentlich ist jedoch, dass der Ausgang des Standardinterfaces sowohl bezüglich des Hardwareanschlusses als auch bezüglich des Datenformates in jedem Fall gleich und damit normiert ist.

Die normierte Ausgangsinformation kann - wie oben bereits angegeben - wahlweise in eine Datei eingeschrieben werden. Sie kann auch alternativ in einem sog. "shared-memory" aufgenommen werden, wobei dies einer Speichereinrichtung für einen gemeinsamen Zugriff entspricht, auf welche sowohl die Steuereinrichtung des Standardinterfaces als auch externe Anwendungen, welche diese Informationen benötigen, Zugriff haben können. Das "shared-memory" hat vorzugsweise eine sog. "firstin-/first-out-Funktion", d. h. früher eingegebene Daten werden auch früher wieder ausgelesen (Pipelineeffekt).

Die Erfindung wird nachfolgend auch mit Bezug auf die beiliegenden Zeichnungen näher erläutert. Die Zeichnungen zeigen in
- Fig. 1: eine schematische Darstellung eines Gesamtsystems unter Zwischenschaltung eines erfindungsgemäßen Standardinterfaces für ein Fahrzeug und
- Fig. 2: eine schematische Darstellung eines Standardinterfaces gemäß einer Ausführungsform der Erfindung.

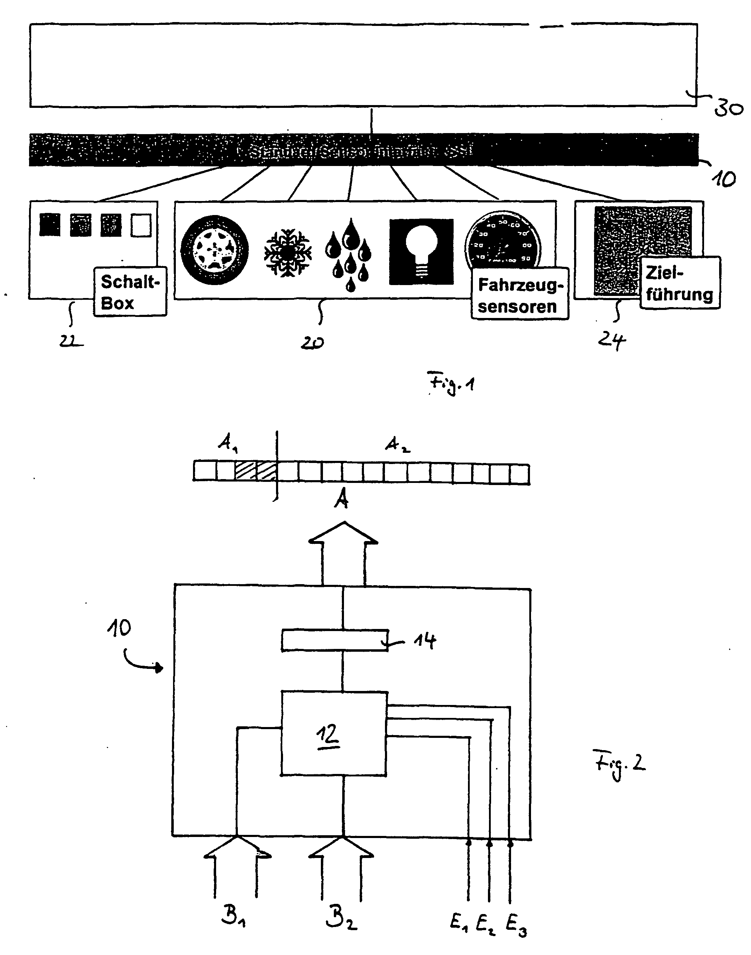

Das in Fig. 1 dargestellte System umfasst Einrichtungen, wie verschiedene Sensoren 20, eine manuelle Schaltbox 22 und eine Zielführungseinrichtung 24, die jeweils Eingangsinformationen an ein Standardsensorinterface (SSI) 10 abgeben. Das Standardinterface 10 wandelt diese Informationen in ein normiertes fahrzeugherstellerunabhängiges Datenformat um und stellt es einem Endgerät 30 zur Verfügung, welches aufgrund der gelieferten Daten eine Verkehrs- und Umweltinformationsgewinnung betreibt. Das Endgerät 30 wiederum stellt die gewonnenen Verkehrs- und Umweltdaten über eine nicht dargestellte Kommunikationseinrichtung einer Zentrale zur weiteren Verarbeitung zur Verfügung.

Bei den mit der Bezugsziffer 20 gekennzeichneten Sensoren handelt es sich vorliegend um einen Reifendrucksensor, einen Temperatursensor, einen Regensensor, Lichtinformationsdaten und Fahrzeuggeschwindigkeitsdaten. Mit der manuellen Schaltbox 22 werden manuell erzeugte Daten, beispielsweise durch Schalterbetätigung erzeugte Daten, dem Standardsensorinterface 10 zur Verfügung gestellt. Überdies werden gemäß Fig. 1 mit der Zielführungseinrichtung 24 noch geographische Daten, die mit einem nicht weiter dargestellten Navigationsgerät generiert worden sind, ebenfalls dem Standardsensorinterface 10 zur Verfügung gestellt.

Das Standardsensorinterface 10 generiert aus diesen Eingangsinformationen eine normierte Ausgangsinformation A mit definiertem Digitalformat und vorgegebener Länge, wie dies in Fig. 2 dargestellt ist. Die normierte Ausgangsinformation umfasst vorliegend den Header A₁ und den Informationsteil A₂, wobei jedes Käschen für ein Byte steht.

Gemäß Fig. 2 besitzt das vorliegend gezeigte Standardsensorinterface 10 fünf physikalische Eingänge, nämlich zwei Bus-Eingänge B₁ und B₂ und drei weitere separate Eingangsleitungen E₁, E₂ und E₃. Über die Busleitung B₁ werden dem Standardsensorinterface 10 Motorbetriebsdaten, wie die Fahrgeschwindigkeit, die Beschleunigung, die Motoröltemperatur etc. zur Verfügung gestellt (Bus B₁). Über die zweite Busleitung B₂ werden dem Standardsensorinterface 10 dem Karosseriebus zugeordnete Informationen wie Innenlicht, Fahrlichtinformationen, Scheibenwischeraktivierungen, Regensensorsignale etc. übermittelt. Die weiteren Eingangsleitungen E₁ bis E₃ übermitteln analoge Signale an eine Steuereinrichtung 12 des Standardsensorinterfaces 10, wie beispielsweise einen analogen Wert für einen Reifendruck.

Die Eingangsstruktur kann werden bei verschiedenen Fahrzeugtypen verschieden gestaltet. Allen Ausführungsformen ist jedoch gleich, dass die Eingangsdaten sämtlich der Steuereinrichtung 12 zugeführt werden, die diese Daten entsprechend einem Algorithmus in das festgelegte normierte Datenformat umsetzt.

Der Header A₁ umfaßt statische Daten und der Informationsteil A₂ dynamische Daten. Die Header-Daten werden nur einmal beim Start der Datenaufzeichnung generiert und beinhalten statische Informationen, wie Fahrzeugmodelldaten, Höchstgeschwindigkeitsdaten, Getriebedaten, Softwareversionsdaten etc.

Die dynamischen Daten ändern sich laufend, werden zyklisch aktualisiert und fortgeschrieben. Im vorliegenden Fall umfassen die Header 4 Bytes und der Informationsteil 12 Bytes. Jedoch können andere Formate mit anderen Bytezahlen gewählt werden, beispielsweise 38 Byte für den Header und 68 Byte für den Informationsteil. Bei der alternativen Ausführungsform des normierten Ausgangsformats werden im Informationsteil 40 Informationskomponenten, wie die momentane Zeit, die gefahrene Wegstrecke, die gefahrene Richtung, der Straßenname der gerade durchfahrenen Straße, die Straßenkategorie, die momentane Geschwindigkeit, die Gaspedalstellung, die Bremsbetätigung, Bremsregelbetätigungen, die Temperatur, Lichtaktivitäten, Nebellichtaktivitäten, Blinker- und Wischeraktivitäten etc. übermittelt.

Im Header gibt ein statistisches Datum in Form eines Bitvektors (vorliegend schraffiert) Auskunft darüber, welche Informationen im Fahrzeug erzeugt und damit im Ausgangsformat versorgt werden können.

Die Steuereinrichtung 12 bestimmt aus den eingehenden Informationen, die über die Datenbusse B₁ und B₂ sowie die Einzelleitungen E₁ bis E₃ vorliegen, die jeweiligen Ausgangsinformationen und setzt sie in das normierte Datenformat um. Die dynamischen Daten werden dabei zyklisch im Sekundentakt aktualisiert und von der Steuereinrichtung 12 in eine gemeinsame Speichereinheit 14 geschrieben, die nach dem frist-in-/first-out-Modus arbeitet. Aus der gemeinsamen Speichereinheit 14 werden die Daten im normierten Format A dann ausgelesen. Die gemeinsame Speichereinrichtung 14 hat ihren Namen davon, dass sowohl die Steuereinrichtung 12 als auch externe Anwendungen darauf zugreifen können, wobei der beiderseitige Zugriff von Seiten des Standardsensorinterface 10 und von Seiten des auslesenden Programms selbst organisiert wird. Ein sog. lock-Mechanismus wird dadurch überflüssig.

Die Ausgangsdaten des gesamten Datensatzes haben eine feste Satzlänge und werden ohne Feld- oder Zeilentrenner zeilenweise in den Speicher 14 geschrieben.

Nachdem die in das Standardinterface 10 eingehenden Informationen in das normierte Datenformat umgesetzt sind, können auf die Daten der Fahrzeugsensorik aufsetzende Module und Endgeräte ohne weitere Anpassung nachgeschaltet werden.

## Patentansprüche

1. Standardinterface für ein Fahrzeug, umfassend
- Eingänge für fahrzeugseitig generierte Informationen, die direkt oder indirekt Aussagen über die Verkehrssituation um ein Fahrzeug oder Umweltbedingungen zulassen,
- einen Ausgang, über den eine normierte Information über statische Daten des jeweiligen Fahrzeugs und dynamischeVerkehrs- und Umweltdaten mit definiertem digitalen Format und vorgegebener Länge über eine Kommunikationseinrichtung an eine Zentrale abgegeben wird, wobei die statischen Daten in einem Header enthalten sind und als ein statisches Datum ein Bitvektor vorgesehen ist, welcher angibt, welche Daten vom Fahrzeug generiert werden, und die dynamische Daten in einem dem Header nachgeschalteten Informationsteit enthalten sind, und
- eine Steuereinrichtung, die aus den Eingangsinformationen die jeweils zugeordneten digitalen Informationen für das vorgegebene Format definiert.

2. Standardinterface nach Anspruch 1,
**dadurch gekennzeichnet,**
**dass** die dynamischen Daten in vorgegebenen Zeitabständen aktualisiert werden.

3. Standardinterface nach Anspruch 2,
**dadurch gekennzeichnet,**
**dass** die Daten im Sekundentakt aktualisiert werden

4. Standardinterface nach einem der Ansprüche 1 bis 3,
**dadurch gekennzeichnet,**
**dass** es sich bei den Eingangsinformationen um Sensordaten, manuell erzeugte Daten oder Zielführungsdaten handelt.

5. Standardinterface nach einem der Ansprüche 1 bis 4,
**dadurch gekennzeichnet,**
**dass** eine Speichereinrichtung für einen gemeinsamen Zugriff vorgesehen ist, in der die Daten laufend eingelesen werden und zu der auch eine externe Anwendung Zugang besitzt.

6. Standardinterface nach einem der Ansprüche 1 bis 5,
**dadurch gekennzeichnet,**
**dass** eine Pipe als shared memory mit einer first-in/first-out Funktion vorgesehen ist.

7. Standardinterface nach einem der Ansprüche 1 bis 6,
**dadurch gekennzeichnet,**
**dass** die Ausgangsinformationen in einer Datei nacheinander aufgezeichnet werden.

## Claims

1. A standard interface for a vehicle, comprising
- inputs for information generated on the vehicle side, allowing direct or indirect assertions about the traffic situation around a vehicle or environmental conditions,
- an output, via which standardised information about statistical data of the respective vehicle and dynamic traffic and environmental data is delivered with a defined digital format and predetermined length via a communication device to a centre, the statistical data being contained in a header and a bitvector being provided as a static datum, the bitvector indicating which data is generated by the vehicle, and the dynamic data being contained in an information part downstream from the header, and
- a control device which defines the respectively associated digital information for the predetermined format from the input information.

2. A standard interface according to claim 1, **characterised in that** the dynamic data is updated at predetermined time intervals.

3. A standard interface according to claim 2, **characterised in that** the data is updated in second timing.

4. A standard interface according to any one of claims 1 to 3, **characterised in that** the input information is sensor data, manually generated data or destination guide data.

5. A standard interface according to any one of claims 1 to 4, **characterised in that** a memory device is provided for common access, in which device the data is continuously read in and to which an external application also has access.

6. A standard interface according to any one of claims 1 to 5, **characterised in that** a pipe is provided as shared memory with a first in/first out function.

7. A standard interface according to any one of claims 1 to 6, **characterised in that** the pieces of output information are recorded one after the other in a data file.

## Revendications

1. Interface standard pour un véhicule comprenant :
- des entrées pour des informations générées par le véhicule et donnant des informations directes ou indirectes relatives à l'état de la circulation autour du véhicule et des conditions d'environnement,
- une sortie par laquelle est fournie une information normée concernant les données statiques du véhicule et des données dynamiques de circulation et d'environnement suivant un format numérique défini et de longueur prédéterminée par une installation de communication vers une centrale,
les données statiques étant contenues dans l'en-tête et comme ensemble de données statiques dans un vecteur de bit indiquant les données générées par le véhicule et une partie d'information à la suite de l'en-tête qui contient les données dynamiques,
- une installation de commande qui partant des informations d'entrée définit les informations numériques associées au format prédéfini.

2. Interface standard selon la revendication 1,
**caractérisée en ce que**
les données dynamiques sont actualisées à des intervalles de temps prédéfinis.

3. Interface standard selon la revendication 2,
**caractérisée en ce que**
les données sont actualisées à la période d'une seconde.

4. Interface standard selon l'une des revendications 1 à 3,
**caractérisée en ce que**
les informations d'entrée sont des données de capteur, des données générées manuellement ou des données de guidage.

5. Interface standard selon l'une des revendications 1 à 4,
**caractérisée par**
une mémoire pour un accès commun dans laquelle sont enregistrées en continu les données, l'application externe accédant à cette mémoire.

6. Interface standard selon l'une des revendications 1 à 5,
**caractérisée par**
une mémoire partagée de type pipeline, avec une fonction première entrée/première sortie.

7. Interface standard selon l'une des revendications 1 à 6,
**caractérisée en ce que**
les informations de sortie sont enregistrées successivement dans un fichier.
